# EUROPÄISCHE PATENTSCHRIFT

(11) **EP 0 541 019 B1**
(45) Veröffentlichungstag und Bekanntmachung des Hinweises auf die Patenterteilung: **16.08.1995**
(21) Anmeldenummer: 92118681.3
(22) Anmeldetag: 31.10.1992
(51) Int. Cl.: F27D 21/00, H05B 6/42, H05B 6/28, G01B 7/06

(54) **Verfahren und Einrichtung zur Überwachung der Wandstärke eines keramischen Tiegels eines Induktionstiegelofens**
Process and device for monitoring the thickness of an induction furnace ceramic crucible
Procédé et dispositif pour surveiller l'épaisseur d'un creuset céramique d'un four à induction

(30) Priorität: 06.11.1991 DE 4136447
(43) Veröffentlichungstag der Anmeldung: 12.05.1993
(73) Patentinhaber: ABB PATENT GmbH, 68309 Mannheim (DE)
(72) Erfinder: Wicker, Helmut, W-5804 Herdecke (DE); Andree, Wolfgang, Dr., W-4670 Lünen (DE); Pitzer, Bettina, W-4600 Dortmund 1 (DE); Grosse-Bohle, Martin, W-4352 Herten (DE)
(74) Vertreter: Rupprecht, Klaus, Dipl.-Ing.

(56) Entgegenhaltungen:
- DE-A- 2 448 986
- DE-A- 2 602 615
- DE-C- 743 906

## Beschreibung

Die Erfindung bezieht sich auf ein Verfahren und eine Einrichtung zur Überwachung der Wandstärke eines keramischen Tiegels eines Induktionstiegelofens gemäß dem Oberbegriff der Ansprüche 1 bzw. 5. Ein derartiges Verfahren und eine derartige Einrichtung zur Überwachung der Wandstärke eines keramischen Tiegels eines Induktionstiegelofens sind aus der DE-A 26 02 615 bekannt.

Beim Einschmelzen metallischen Einsatzmaterials im keramischen Tiegel eines Induktionstiegelofens treten metallurgische Reaktionen zwischen der flüssigen Schmelze und dem keramischen Tiegel auf, die zu Auswaschungen an der Tiegelwand (Futter) und zu Durchbrüchen durch die Tiegelwand führen können. Für den sicheren Betrieb des Induktionstiegelofens ist es deshalb von Wichtigkeit, den Auswaschzustand des keramischen Tiegels zu kennen, um ggf. rechtzeitig Reparaturarbeiten an der Tiegelwand durch-führen zu können, ehe ein Durchbruch durch die Tiegelwand zu einem störungsbedingten Abschalten des Induktionstiegelofens zwingt, was wiederum kostspielige Stillstandszeiten des Ofens zur Folge hat.

Um den Auswaschzustand eines keramischen Tiegels eines Induktionstiegelofens zu erfassen, ist es deshalb allgemein bekannt, den komplexen elektrischen Widerstand (Widerstand mit ohmschen und/oder induktiven und/oder kapazitiven Anteilen) der Ofenspule zu erfassen. Da der im Sekundärkreis des Induktionstiegelofens fließende Strom von der Höhe der Sekundärspannung und der Größe der Impedanz des gesamten Sekundärkreises abhängt, ist es durch Messung des Istwertes der an der Ofenspule anliegenden Spannung und des Istwertes des durch die Ofenspule fließenden Stromes möglich, Aussagen über das quasi durchschnittliche Verhalten des Futters, d.h. der Wand des keramischen Tiegels, zu machen. Dieses allgemein bekannte Verfahren ist jedoch vielfach zu grob, da es lediglich Durchschnittswerte liefert. Wird die tolerierte Abweichung zwischen dem Widerstands-Istwert und dem einem neuwertigen Tiegel entsprechenden Widerstands-Sollwert zu gering gewählt, ist es möglich, daß bereits mehrere kleinere Auswaschungen in unnötiger Weise eine Meldung auslösen. Wenn die tolerierte Abweichung zu groß gewählt wird, ist es möglich, daß eine einzige Auswaschung bis zum Durchbruch durch die Tiegelwand führt, ohne daß zuvor eine Meldung ausgelöst wird.

Aus der eingangs bereits genannten DE-A 26 02 615 sind ein Verfahren und eine Einrichtung zur betriebsmäßigen Überwachung der Tiegelwandstärke an elektrischen Induktionsöfen bekannt, bei denen die zeitlichen Veränderungen vom Widerstand abhängiger Meßgrößen hinsichtlich der gesamten Ofenspule und der die Ofenspule bildenden Teilspulen erfaßt und miteinander verglichen werden, um derart die Wandstärke des keramischen Tiegels zu überwachen.

Aus der DE-C 743 906 ist ein Hochfrequenzschmelzofen bekannt, bei dem die Ofenspule mittels einer Kühlflüssigkeit gekühlt wird, wobei zur Vermeidung von Durchbrüchen der Tiegelwandung von der Kühlwassertemperatur beeinflußte Vorrichtungen, z.B. Thermoelemente, Widerstandsspulen, Thermometer oder Bimetallstreifen angeordnet sind, die bei unzulässiger Temperatursteigerung die Ofenabschaltung bewirken. Zweckmäßig wird die Differenz zwischen Kühlwassereintritts- und -austrittstemperatur herangezogen, um unabhängig von Temperaturschwankungen des eintretenden Kühlwassers zu werden.

Der Erfindung liegt davon ausgehend die Aufgabe zugrunde, ein Verfahren zur Überwachung der Wandstärke eines keramischen Tiegels eines Induktionstiegelofens der eingangs genannten Art anzugeben, das feinfühlig Auswaschungen der Tiegelwand erfaßt und den genauen Ort einer Auswaschung angibt. Ferner soll eine entsprechende Einrichtung zur Überwachung der Wandstärke eines keramischen Tiegels eines Induktionstiegelofens angegeben werden.

Diese Aufgabe wird bezüglich des Verfahrens in Verbindung mit den Merkmalen des Oberbegriffes erfindungsgemäß durch die im Kennzeichen des Anspruchs 1 angegebenen Merkmale gelöst.

Diese Aufgabe wird bezüglich der Vorrichtung in Verbindung mit den Merkmalen des Oberbegriffes erfindungsgemäß durch die im Kennzeichen des Anspruchs 5 angegebenen Merkmale gelöst.

Die mit der Erfindung erzielbaren Vorteile bestehen insbesondere darin, daß durch Erfassung der Kühlflüssigkeitstemperatur-Istwerte an mehreren Stellen der Ofenspule und Bildung der Temperaturdifferenzen der durch die Wand fließende Wärmestrom relativ gut erfaßt wird. An Auswaschungen in der Wand ergibt sich ein erhöhter Wärmestrom, da der thermische Widerstand durch die Auswaschung herabgesetzt wird.

Die Erfassung des durch die Tiegelwand fließenden Wärmestromes wird mit einem weiteren Verfahren kombiniert, indem die komplexen elektrischen Widerstands-Istwerte von Teilspulen der Ofenspule ermittelt werden. Letzteres wird durch Abgreifen der an der Teilspule anstehenden Spannung ermöglicht.

Bei genügend hoher Anzahl von Spannungs-Meßstelen können relativ genaue Aussagen über den Ort der Auswaschungen gemacht werden, wenn zusätlich die erfaßten Temperaturdifferenzen bei der Auswertung der Teilspulen-Widerstands-Istwerte herangezogen werden und eine große Vielzahl von Temperaturmeßstellen über die Ofenspule verteilt ist.

Ein weiteres Plausibilitäts-Kriterium für die vorgefundenen und ausgewerteten Meßwerte ist die Messung des Gleichstrom-Erdwiderstandes zwischen Ofenspule bzw. zwischen den einzelnen Ofenspulenwindungen und dem geerdeten Bad im Tiegel.

Überprüft werden könnte eine Messung nach der oben angegebenen Art und Weise durch eine Vermessung des Tiegels durch einen einzufahrenden rotierenden Laser in einem wassergekühlten Gehäuse.

Vorteilhaft können die verschiedenen Meßwerte einer elektronischen Datenverarbeitungsanlage zugeleitet werden, die eine Auswertung der Meßwerte vornimmt und eine Meldung abgibt, wenn eine reparaturbedürftige Auswaschung vorliegt, wobei die Meldung auch den genauen Ort der Auswaschung angibt.

Die Erfindung wird nachstehend anhand der in der Zeichnung dargestellten Ausführungsbeispiele erläutert. Es zeigen:
- Figur 1: einen Induktionstiegelofen mit einer Vielzahl von Kühlflüssigkeit-Temperaturmeßstellen,
- Figur 2: eine Auswaschung in der Tiegelwand des Induktionstiegelofens sowie eine Kühlflüssigkeits-Temperaturmeßstelle im Detail,
- Figur 3: einen Induktionstiegelofen mit einer Vielzahl von Meßstellen zur Erfassung der an Teilspulen der Ofenspule anliegenden Spannungs-Istwerte,
- Figur 4: eine Meßanordnung zur Bestimmung des Gleichstrom-Erdwiderstand-Istwertes zwischen der Ofenspule und dem geerdeten metallischen Einsatzmaterial,
- Figur 5: eine Vermessung der Innenwand des Tiegels mittels eines Laser,
- Figur 6: eine EDV-Anlage zur Überwachung der Wandstärke des Tiegels.

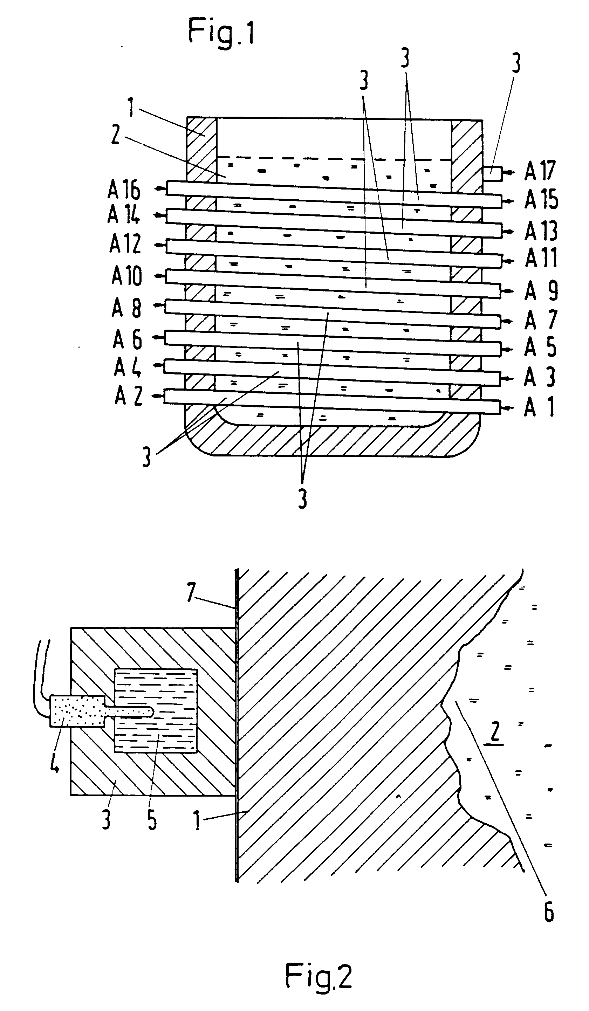

In Figur 1 ist ein Induktionstiegelofen mit einer Vielzahl von Kühlflüssigkeit-Temperaturmeßstellen dargestellt. Es ist der keramische Tiegel 1 eines Induktionstiegelofens zu erkennen, wobei der Tiegel mit geschmolzenem metallischem Einsatzmaterial 2 (Bad, Schmelze) gef}llt ist. Um den Tiegel 1 ist eine durch eine Kühlflüssigkeit, vorzugsweise Brauchwasser, gekühlte Ofenspule 3 angeordnet. Die Kühlflüssigkeit tritt z.B. am Ort A1 in den Kühlkanal der Ofenspule ein, durchströmt die schraubenlinienförmig um den Tiegel 1 gewundene Ofenspule 3 und tritt am Ort A17 wieder aus dem Kühlkanal der Ofenspule aus.

Der durch die Ofenspule 3 fließende elektrische Wechselstrom vorgegebener Frequenz erzeugt ein magnetisches Wechselfeld, das innerhalb des Tiegels 1 durch das metallische Einsatzmaterial 2 geführt wird. Das magnetische Wechselfeld induziert im metallischen Einsatzmaterial 2 Wirbelströme, deren Energie in Wärme umgesetzt wird, so daß unter ständiger Energiezufuhr das Einsatzmaterial zum Schmelzen gebracht wird.

Ein Teil der beim induktiven Schmelzen produzierten Wärmeleistung "wandert" durch die Wand (Futter) des Tiegels 1 nach außen und wird über die im K}hlkanal der Ofenspule 3 strömende Kühlflüssigkeit zu einem externen Rückkühler abgeführt. Der durch die Wand des Tiegels 1 dringende Wärmestrom kann ermittelt werden, wenn die Ofenspule 3 mit einer Vielzahl von Kühlflüssigkeit-Temperaturmeßstellen 4 versehen ist. Diese Temperaturmeßstellen 4 sind in gleichmäßigen Abständen längs der Ofenspule verteilt angeordnet und ihre Einbauorte A1, A2, A3....A17 sind in Figur 1 entsprechend gekennzeichnet. Die Temperaturmeßstellen 4 erfassen die Temperatur-Istwerte der Kühlflüssigkeit. Die Temperaturdifferenz zwischen den Istwerten benachbarter Temperaturmeßstellen 4 ist ein Maß für den zwischen den Temperaturmeßstellen 4 durch die Wand des Tiegels 1 gewanderten Wärmestrom. Dieser Wärmestrom ist von der Wandstärke des Tiegels Tiegels abhängig und erhöht sich mit geringer werdender Wandstärke. Liegt bei einer Teilfläche des Tiegels 1 eine Auswaschung vor, so ist die Wandstärke dieser Teilfläche reduziert und folglich erhöht sich der Wärmestrom durch diese Teilfläche.

Indem die erfaßten Temperaturdifferenzen mit idealen, bei einem neuwertigen Tiegel (ohne Auswaschungen) auftretenden Temperaturdifferenz-Sollwerten verglichen werden, können bei Abweichungen zwischen erfaßten Temperaturdifferenzen und idealen Temperaturdifferenz-Sollwerten Rückschlüsse auf die aktuelle Wandstärke des Tiegels gezogen werden.

Bei genügend hoher Anzahl von Temperaturmeßstellen 4 können auch relativ genaue Aussagen über den Ort der Auswaschungen gemacht werden.

In Figur 2 sind eine Auswaschung in der Tiegelwand des Induktionstiegelofens sowie eine Kühlflüssigkeit-Temperaturmeßstelle im Detail dargestellt. Im Kühlkanal der rohrförmigen, einen quadratischen Querschnitt aufweisenden Ofenspule 3 strömt die Kühlflüssigkeit 5. Der Sensor der Kühlflüssigkeit-Temperaturmeßstelle 4 ragt in den Kühlkanal und wird von der Kühlflüssigkeit 5 umspült. Vorzugsweise sind die Temperaturmeßstellen 4 durch Bohrungen in der Ofenspule 3 eingeschraubt.

In Figur 2 ist zu erkennen, daß das Futter des Tiegels 1 teilweise eine durch eine Auswaschung 6 reduzierte Wandstärke aufweist. Die Auswaschung 6 ist vollständig von geschmolzenem metallischem Einsatzmaterial 1 ausfüllt. Zwischen Ofenspule 3 und Tiegel 1 befindet sich üblicherweise eine elektrische Isolationsschicht 7, um zu verhindern, daß sich ein elektrischer Strom zwischen kupferner Außenmantelfläche der Ofenspule 3 und Außenmantelfläche des aus einem Material mit geringer elektrischer Leitfähigkeit bestehenden Tiegels 1 ausbildet.

Die vorstehend beschriebene Bestimmung des Wärmestroms durch die Wand des Tiegels wird ergänzt, indem der komplexe elektrische Widerstands-Istwert der Ofenspule durch Erfassung des an der Ofenspule anliegenden Spannungs-Istwertes und des durch die Ofenspule fließenden Strom-Istwertes ermittelt wird. Der erfaßte Widerstands-Istwert wird mit einem idealen, bei einem neuwertigen keramischen Tiegel auftretenden Widerstands-Sollwert verglichen. Bei Abweichungen zwischen Widerstand-Sollwerten und -Istwerten können Rückschlüsse auf die Wandstärke des keramischen Tiegels gezogen werden.

Eine Verfeinerung dieser Methode wird erzielt, indem die komplexen elektrischen Widerstands-Istwerte von Teilspulen der Ofenspule durch Erfassung der an den Teilspulen anliegenden Spannungs-Istwerte und des durch die Ofenspule fließenden Strom-Istwertes ermittelt werden.

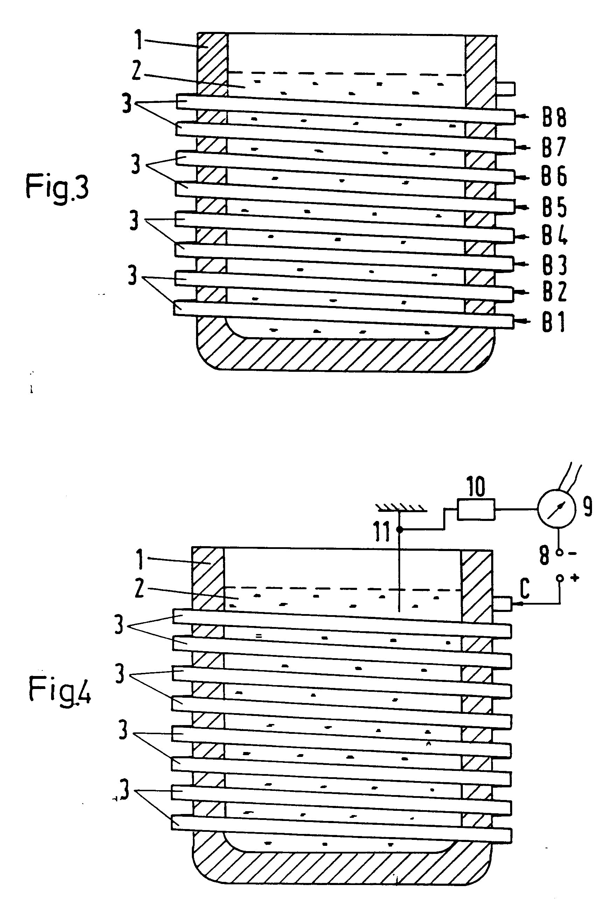

Fig. 3 zeigt hierzu einen Induktionstiegelofen mit einer Vielzahl von Meßstellen zur Erfassung der an Teilspulen der Ofenspule anliegenden Spannungs-Istwerte. Die Einbauorte der Spannungs-Meßstellen sind mit B1, B2, B3....B8 bezeichnet. Die ermittelten Widerstands-Istwerte werden mit idealen, bei einem neuwertigen keramischen Tiegel auftretenden Widerstands-Sollwerten verglichen. Bei Abweichungen zwischen Widerstands-Sollwerten und -Istwerten werden Rückschlüsse auf die Wandstärke des keramischen Tiegels gezogen.

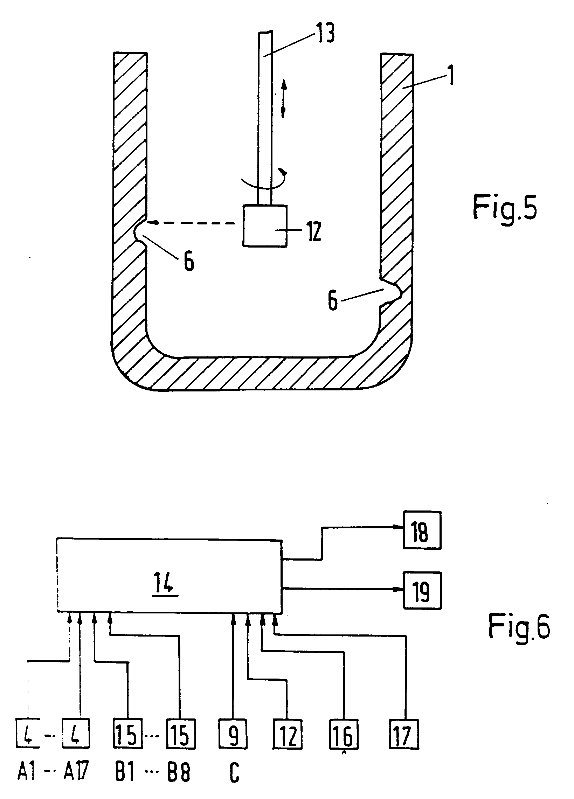

Eine weitere Ergänzung der vorstehend angeführten Methoden kann darin bestehen, daß der Gleichstrom-Erdwiderstand-Istwert zwischen der Ofenspule 3 bzw. zwischen einzelnen Teilspulen und dem geerdeten metallischen Einsatzmaterial 2 im keramischen Tiegel 1 gemessen wird. Eine entsprechende Meßanordnung zur Bestimmung dieses Erdwiderstand-Istwertes ist in Fig. 4 gezeigt. Es ist eine Gleichspannungsquelle 8 zu erkennen, deren negative Klemme über ein Meßinstrument 9 zur Spannungserfassung und einen Vorwiderstand 10 mit einer Erdungseinrichtung 11 für das metallische Einsatzmaterial 2 verbunden ist. Die positive Klemme der Gleichspannungsquelle 8 ist am Einbauort C elektrisch mit der Ofenspule 3 verbunden. Der mit dieser Gleichstrom-Erdwiderstand-Meßstelle nach dem ohmschen Gesetz erfaßte Widerstands-Istwert wird mit einem idealen, bei einem neuwertigen keramischen Tiegel auftretenden Widerstands-Sollwert verglichen. Bei Abweichungen zwischen Widerstands-Sollwert und -Istwert werden Rückschlüsse auf die Wandstärke des keramischen Tiegels gezogen.

Wegen der in Fig. 2 angedeuteten Isolationsschicht 7 zwischen Ofenspule 3 und Tiegel 1 ist der Widerstands-Sollwert bei ungestörtem Betrieb relativ hoch und ein wesentlich herabgesetzter Widerstands-Istwert deutet auf einen Durchbruch in der Tiegelwand hin, bei dem metallisches Einsatzmaterial 2 direkten Kontakt mit der Ofenspule 3 hat.

Eine Überprüfung der nach der vorstehend angeführten Art und Weise durchgeführten Wandstärke-Überwachungen kann durch eine Vermessung der Innenwand des Tiegels mittels eines Laser erfolgen, wie in Figur 5 gezeigt. Eine solche Vermessung ist unmittelbar nach Leerkippen des Tiegels 1, also bei noch relativ heißem Tiegel, möglich. Hierzu wird ein an einer rotierenden Achse 13 befestigter Laser 12 in den Tiegel 1 eingefahren. Der Laser 12 wird vorzugsweise mittels einer Kühlflüssigkeit gek}hlt. Durch langsames Einfahren des Lasers 12 mit vorgebbarer Geschwindigkeit und permanenter Rotation mit vorgebbarer Drehfrequenz ist eine vollständige Vermessung der Tiegel-Innenwandung möglich, so daß Auswaschungen 6 sehr schnell und genau lokalisiert werden.

Es ist zweckmäßig, daß die erfaßten Temperatur-Istwerte und/oder Spannungs-Istwerte und/oder Strom-Istwerte und/oder Widerstands-Istwerte und/oder Gleichstrom-Erdwiderstand-Istwerte und/oder Meßwerte des Laser sowie die entsprechenden Sollwerte einer elektronischen Datenverarbeitungsanlage zugeleitet werden, die diese Werte zumindest teilweise miteinander verknüpft und derart in Beziehung zueinander setzt, daß Ort und Zustand von Auswaschungen in der Wand des keramischen Tiegels erfaßt und gemeldet werden.

Figur 6 zeigt eine entsprechende EDV-Anlage zur Überwachung der Wandstärke des Tiegels. Die EDV-Anlage 14 empfängt Signale der Kühlflüssigkeit-Temperaturmeßstellen 4 (Einbauorte A1...A17), der Spannungs-Meßstellen 15 zur Erfassung der Spannungs-Istwerte der Teilspulen (Einbauorte B1....B8), des Meßinstruments 9 zur Spannungserfassung betreffend Gleichstrom-Erdwiderstand-Istwert (Einbauort C), des Lasers 12 (Vermessungssignale), der Spannungs-Meßstelle 16 zur Erfassung der an der Ofenspule 3 anliegenden Spannung und der Strom-Meßstelle 17 zur Erfassung des durch die Ofenspule 3 fließenden Stromes. Die EDV-Anlage 14 bildet Temperaturdifferenzen, komplexe Widerstands-Istwerte der Ofenspule und von Teilspulen der Ofenspule sowie Gleichstrom-Erdwiderstand-Istwerte, vergleicht diese Istwerte mit vorgegebenen Sollwerten und zeigt den daraus abzuleitenden Zustand (Wandstärke) des Tiegels an einer Anzeigeeinrichtung 18 an. Desgleichen verarbeitet die EDV-Anlage 14 die Signale des Lasers 12 zu einem Abbild der Tiegel-Innenwandung. Eine Warneinrichtung 19 spricht an, wenn eine ermittelte Auswaschung zulässige Grenzen überschreitet und zu reparieren ist, bzw. wenn eine Auswaschung bereits zu einem Durchbruch durch die Tiegelwand geführt hat.

## Patentansprüche

1. Verfahren zur Überwachung der Wandstärke eines keramischen Tiegels eines Induktionstiegelofens, wobei eine Ofenspule (3) um den keramischen Tiegel (1) angeordnet ist, und die komplexen elektrischen Widerstands-Istwerte von Teilspulen der Ofenspule durch Erfassung der an den Teilspulen anliegenden Spannungs-Istwerte und des durch die Ofenspule fließenden Strom-Istwertes ermittelt werden, dadurch gekennzeichnet, daß die Temperatur-Istwerte der Kühlflüssigkeit an mehreren Stellen (4,A1...A17) der mittels einer Kühlflüssigkeit gekühlten Ofenspule (3) erfaßt werden, daß hieraus die Temperaturdifferenzen in der Ofenspule gebildet werden, daß die gebildeten Temperaturdifferenzen mit idealen, bei einem neuwertigen keramischen Tiegel auftretenden Temperaturdifferenz-Sollwerten verglichen werden, daß die erfaßten Widerstands-Istwerte mit idealen, bei einem neuwertigen keramischen Tiegel (1) auftretenden Widerstands-Sollwerten verglichen werden und daß bei Abweichungen zwischen Widerstands-Sollwerten und -Istwerten und bei Abweichungen zwischen erfaßten Temperaturdifferenzen und idealen Temperaturdifferenz-Sollwerten Rückschlüsse auf die Wandstärke des keramischen Tiegels und den genauen Ort einer Auswaschung (6) gezogen werden.

2. Verfahren nach Anspruch 1, dadurch gekennzeichnet, daß gekennzeichnet, daß der Gleichstrom-Erdwiderstand-Istwert zwischen der Ofenspule (3) bzw. einzelnen Teilspulen und dem geerdeten metallischen Einsatzmaterial (2) im keramischen Tiegel (1) gemessen wird, daß der erfaßte Erdwiderstands-Istwert mit einem idealen, bei einem neuwertigen keramischen Tiegel auftretenden Erdwiderstands-sollwert verglichen wird und daß bei Abweichungen zwischen Widerstands-Sollwert und -Istwert Rückschlüsse auf die Wandstärke des keramischen Tiegels (1) gezogen werden.

3. Verfahren nach Anspruch 1 oder 2, dadurch gekennzeichnet, daß ein rotierender, mittels einer Kühlflüssigkeit gekühlter Laser (12) in den leergekippten keramischen Tiegel (1) einfährt und eine Vermessung der Innenwand des Tiegels durchführt.

4. Verfahren nach wenigstens einem der Ansprüche 1 bis 3, dadurch gekennzeichnet, daß die erfaßten Temperatur-Istwerte und Spannungs-Istwerte und/oder Strom-Istwerte und/oder Widerstands-Istwerte und/oder Gleichstrom-Erdwiderstand-Istwerte und/oder Meßwerte des Lasers (12) sowie die entsprechenden Sollwerte einer elektronischen Datenverarbeitungsanlage (14) zugeleitet werden, die diese Werte zumindest teilweise miteinander verknüpft und derart in Beziehung zueinander setzt, daß Ort und Zustand von Auswaschungen (6) in der Wand des keramischen Tiegels (1) erfaßt und gemeldet werden.

5. Einrichtung zur Überwachung der Wandstärke eines keramischen Tiegels eines Induktionstiegelofens, wobei eine Ofenspule (3) um den keramischen Tiegel (1) angeordnet ist und Spannungs-Meßstellen (15,B1..B8) an Teilspulen der Ofenspule (3) vorgesehen sind, dadurch gekennzeichnet, daß eine Vielzahl, mindestens mehr als zwei, von Kühlflüssigkeits-Temperaturmeßstellen (4,A1....A17) über die mittels einer Kühlflüssigkeit gekühlten Ofenspule (3) verteilt vorgesehen ist.

6. Einrichtung nach Anspruch 5, dadurch gekennzeichnet, daß eine Vorrichtung (11) zur Erdung des im keramischen Tiegel (1) befindlichen metallischen Einsatzmaterials (2) sowie mindestens eine Gleichstrom-Erdwiderstand-Meßstelle (8,9,10) an der Ofenspule (3) vorgesehen sind.

7. Einrichtung nach Anspruch 5 oder 6, gekennzeichnet durch einen mittels einer Kühlflüssigkeit gekühlten Laser (12), der an einer axial bezüglich des keramischen Tiegels (1) beweglichen, rotierenden Achse (13) befestigt ist.

## Claims

1. Method of monitoring the wall thickness of a ceramic crucible of an induction crucible furnace, in which a furnace coil (3) is fitted around the ceramic crucible (1) and the actual values of electrical impedance of subcoils of the furnace coil are ascertained by determining the actual values of the voltages applied across the subcoils and the actual value of the current flowing through the furnace coil, characterized in that the actual values of the temperature of the cooling liquid are determined at a plurality of points (4, A1 ... A17) in the furnace coil (3) cooled by means of a cooling liquid, in that the temperature differences in the furnace coil are derived therefrom, in that the temperature differences derived are compared with ideal specified temperature-difference values occurring in the case of a ceramic crucible in the new condition, in that the actual resistance values determined are compared with ideal specified resistance values occurring in the case of a ceramic crucible (1) in the new condition, and in that, in the event of deviations between specified resistance values and actual resistance values and in the event of deviations between temperature differences determined and ideal specified temperature-difference values, conclusions are drawn about the wall thickness of the ceramic crucible and the precise location of an erosion pit (6).

2. Method according to Claim 1, characterized in that characterized that [sic] the actual value of direct-current earth resistance between the furnace coil (3) or individual subcoils and the earthed metallic stock material (2) in the ceramic crucible (1) is measured, in that the actual earth resistance value determined is compared with an ideal specified earth resistance value occurring in the case of a ceramic crucible in the new condition and in that, in the event of deviations between specified resistance value and actual resistance value, conclusions are drawn about the wall thickness of the ceramic crucible (1).

3. Method according to Claim 1 or 2, characterized in that a rotating laser (12) which is cooled by means of a cooling liquid travels into the emptied ceramic crucible (1) and carries out a survey of the internal wall of the crucible.

4. Method according to at least one of Claims 1 to 3, characterized in that the determined actual temperature values and actual voltage values and/or actual current values and/or actual resistance values and/or actual values of direct-current earth resistance and/or measured values of the laser (12), and also the corresponding specified values, are fed to an electronic data processing system (14) which combines these values at least partly with one another and correlates them in such a manner that location and state of erosion pits (6) in the wall of the ceramic crucible (1) are detected and signalled.

5. Device for monitoring the wall thickness of a ceramic crucible of an induction crucible furnace, in which a furnace coil (3) is fitted around the ceramic crucible (1) and voltage measuring points (15, B1 .. B8) are provided on subcoils of the furnace coil (3), characterized in that a multiplicity, at least more than two, of cooling-liquid temperature measuring points (4, A1 .... A17) is provided so as to be distributed over the furnace coil (3) which is cooled by means of a cooling liquid.

6. Device according to Claim 5, characterized in that a device (11) for earthing the metallic stock material (2) contained in the ceramic crucible (1) and also at least one direct-current earth resistance measuring point (8, 9, 10) are provided on the furnace coil (3).

7. Device according to Claim 5 or 6, characterized by a laser (12) which is cooled by means of a cooling liquid and which is attached to a rotating shaft (13) which can be moved axially in relation to the ceramic crucible (1).

## Revendications

1. Procédé de surveillance de l'épaisseur de paroi d'un creuset en céramique dans un four à creuset chauffé par induction, dans lequel une bobine (3) de four est disposée autour du creuset (1) et on détermine la valeur réelle de la résistance électrique complexe de bobines divisionnaires de la bobine de four en mesurant la valeur réelle de la tension appliquée aux bobines divisionnaires et la valeur réelle du courant traversant la bobine de four, caractérisé par le fait que l'on mesure la valeur réelle de la température du liquide de refroidissement en plusieurs points (4, A1...A17) de la bobine (3) de four refroidie au moyen d'un liquide de refroidissement, par le fait qu'à partir de celles-ci on calcule les différences de température dans la bobine, par le fait que l'on compare les différences de température calculées avec des valeurs de consigne des différences de températures obtenues avec un creuset (1) en céramique neuf et par le fait qu'en cas d'écart entre les valeurs de consigne et les valeurs réelles pour la résistance et en cas d'écart entre les différences de température mesurées et les différences de température idéales de consigne on tire des conclusions sur l'épaisseur de paroi du creuset (1) en céramique et la situation exacte d'une zone érodée (6).

2. Procédé selon la revendication 1, caractérisé par le fait que l'on mesure la valeur réelle de la résistance de terre en courant continu entre la bobine (3) de four ou les bobines divisionnaires et le matériau (2) métallique de la charge présente dans le creuset (1), par le fait que l'on compare la valeur réelle mesurée de la résistance de terre avec une valeur de consigne idéale de la résistance de terre obtenue avec un creuset neuf et par le fait qu'en cas d'écart entre la valeur de consigne et la valeur réelle de la résistance on tire des conclusions sur l'épaisseur de paroi du creuset (1) en céramique.

3. Procédé selon la revendication 1 ou la revendication 2, caractérisé par le fait que l'on introduit un laser (12) refroidi au moyen d'un liquide de refroidissement dans le creuset (1) vidé de son contenu et on procède à un contrôle dimensionnel de la paroi intérieure du creuset.

4. Procédé selon au moins une des revendications 1 à 3, caractérisé par le fait que l'on introduit les valeurs réelles mesurées pour la température et la tension et/ou les valeurs réelles pour le courant et/ou les valeurs réelles pour la résistance et/ou les valeurs réelles pour la résistance de terre en courant continu et/ou des valeurs de mesure du laser (12) ainsi que les valeurs de consigne correspondantes dans une installation (14) de traitement d'informations qui combine au moins partiellement ces valeurs entre elles et les met en relation de manière telle que la situation et l'état de zones (6) érodées dans la paroi du creuset (1) en céramique soient détectés et indiqués.

5. Dispositif pour la surveillance de l'épaisseur de paroi d'un creuset en céramique dans un four à creuset chauffé par induction, dans lequel une bobine (3) de four est disposée autour du creuset (1) et des points de mesure (15, B1...B8) de la tension sont prévus sur des bobines divisionnaires de la bobine (3) de four, caractérisé par le fait qu'il est prévu une pluralité de, au moins plus de deux, points de mesure (4, A1...A17) de la température du liquide de refroidissement qui sont répartis sur la bobine (3) de four refroidie au moyen d'un liquide de refroidissement.

6. Dispositif selon la revendication 5, caractérisé par le fait qu'il est prévu un dispositif (11) de mise à la terre du matériau (2) métallique de la charge présente dans le creuset (1) en céramique ainsi qu'au moins un point de mesure (8, 9, 10) de la résistance de terre en courant continu sur la bobine (3) de four.

7. Dispositif selon la revendication 5 ou la revendication 6, caractérisé par un laser (12) refroidi au moyen d'un liquide de refroidissement qui est fixé sur axe (13) tournant mobile axialement par rapport au creuset (1) en céramique.
